# EUROPÄISCHE PATENTSCHRIFT

(11) **EP 0 695 471 B1**
(45) Veröffentlichungstag und Bekanntmachung des Hinweises auf die Patenterteilung: **23.07.1997**
(21) Anmeldenummer: 94913500.8
(22) Anmeldetag: 19.04.1994
(51) Int. Cl.: H02B 1/38, H02B 13/02

(54) **METALLGEKAPSELTES SCHALTFELD MIT EINEM VERRIEGELUNGSBEDINGUNGEN BERÜCKSICHTIGENDEN TÜRSCHLOSS**
METAL-ENCLOSED SWITCHGEAR PANEL WITH DOOR LOCK RESPONDING TO LOCKING REQUIREMENTS
TABLEAU ELECTRIQUE BLINDE A SERRURE DE PORTE DONT LE FONCTIONNEMENT DEPEND DES CONDITIONS DE VERROUILLAGE

(30) Priorität: 20.04.1993 DE 4313659
(43) Veröffentlichungstag der Anmeldung: 07.02.1996
(73) Patentinhaber: SIEMENS AKTIENGESELLSCHAFT, 80333 München (DE)
(72) Erfinder: MÜLLER, Rolf, D-63785 Obernburg (DE)
(86) Internationale Anmeldenummer: DE9400514
(87) Internationale Veröffentlichungsnummer: WO9424741

(56) Entgegenhaltungen:
- US-A- 2 851 549
- US-A- 3 783 209

## Beschreibung

Die Erfindung betrifft ein metallgekapseltes Schaltfeld mit einem Schalterraum und einem darin mittels eines Fahrantriebes verfahrbar angeordneten Schaltgerät und einer den Schalterraum abschließenden Türanordnung in deren Türblatt ein Verriegelungsbedingungen berücksichtigendes Türschloß mit einem Türriegel sowie wenigstens eine Zugangsöffnung zur Bedienung des Fahrantriebes angeordnet ist.

Ein Schaltfeld dieser Art ist durch die DE-Firmendruckschrift Siemens: Leistungsschalter-Einschubanlagen bis 24 kV, Typ 8BJ20, Katalog HA 25.11, 1992, Seiten 25 bis 27, die US-A- 3 783 209 und US-A- 2 851 549 bekannt geworden.

Der Erfindung liegt die Aufgabe zugrunde, in die Verriegelungsbedingungen auch die Zugangsöffnung für den Fahrantrieb des Schaltgerätes einzubeziehen, um eine gesonderte Handhabung entbehrlich zu machen.

Gemäß der Erfindung wird diese Aufgabe dadurch gelöst, daß das Schloß ein Schließelement mit einer Schließwelle und mit zwei auf der Schließwelle sitzenden Mitnehmern aufweist, von denen der erste Mitnehmer mit dem Türriegel zusammenwirkt, während der zweite Mitnehmer auf der Schließwelle axial verschiebbar angeordnet und in Eingriff bzw. außer Eingriff mit einem die Stellung einer Verschlußklappe an der wenigstens einen Zugangsöffnung für den Fahrantrieb des Schaltgerätes signalisierenden Steuerschieber zubringen ist, wobei die axiale Verschiebung des zweiten Mitnehmers in Abhängigkeit von dem Vorhandensein des Schaltgerätes in dem Schalterraum durch ein Tastorgan steuerbar ist. Da die Winkelstellung der Mitnehmer relativ zu der Schließwelle beliebig wählbar ist, können der Türriegel und der Steuerschieber in der Ebene des Türblattes in beliebiger Richtung zu der Schließwelle angeordnet sein. Dabei ist diese Eigenschaft unabhängig von der Art des verwendeten Schließelementes, weil diese bei einheitlich ausgebildeter Schließwelle mit beliebiger Bedienbarkeit handelsüblich sind, z. B. für übliche Schaltanlagenschlüssel (Doppelbartschlüssel mit Hohlzapfen), Dreikantschlüssel, Vierkantschlüssel oder gebräuchliche Werkzeugprofile.

Nach einer Ausgestaltung der Erfindung kann der Steuerschieber eine fensterartige Ausnehmung mit einem ersten Abschnitt für den zweiten Mitnehmer und mit einem zweiten, das Schließelement übergreifenden Abschnitt besitzen. Das Schließelement dient dabei als Führung für den Steuerschieber.

Die axiale Verschiebbarkeit des zweiten Mitnehmers auf der Schließwelle kann dadurch erreicht werden, daß der zweite Mitnehmer an einer auf der Schließwelle axial verschiebbaren und mit dieser drehschlüssig gekuppelten Schaltmuffe angebracht ist und daß die Schaltmuffe zum Eingriff einer Steuergabel eine Umfangsnut aufweist. Die Umfangsnut ergibt eine weitgehende Unabhängigkeit von der Lage des zur Verschiebung vorgesehenen Tastorgans.

Durch eine weitere zweckmäßige Ausgestaltung kann dafür gesorgt sein, daß das Tastorgan nur entgegen der Schwerkraft beaufshlagt zu werden braucht, um den zweiten Mitnehmer zu verschieben. Dies kann dadurch erreicht werden, daß die Steuergabel durch eine Rückstellfeder in eine bezüglich des Steuerschiebers unwirksame Stellung vorgespannt und durch das Tastorgan entgegen der Wirkung der Rückstellfeder in eine wirksame Stellung umstellbar ist.

Die beschriebenen Funktionen und Bauteile sind ebenso in einer montagefertigen Baugruppe zusammenfaßbar, wie sie übliche Türschlösser darstellen. Hierzu kann das Türschloß einen Schloßkasten aufweisen, in dem das Schließelement befestigt und der Türriegel, der Steuerschieber und das Tastorgan verschiebbar geführt und die Steuergabel schwenkbar gelagert sind.

Das beschriebene Schließsystem ist in Verbindung mit Türanordnungen beliebiger Art verwendbar. Besonders geeignet sind für Schaltfelder der vorliegenden Art jedoch Hubtüren mit Vielfachverriegelung (vgl. DE-A-33 02 696) weil diese aufgrund ihrer Druckfestigkeit hohen Anforderungen an den Personenschutz genügen.

Bei solchen Türanordnungen empfiehlt es sich, das der Türriegel ein die Hubbewegung eines zu der Türanordnung gehöhrenden Hubmechanismus verhinderndes Sperrstück betätigt.

Die Erfindung wird im folgenden anhand des in den Figuren dargestellten Ausführungsbeispieles näher erläutert.

In der Figur 1 ist in schematisch vereinfachter Darstellung ein Mittelspannungs-Schaltfeld mit einem Türschloß in einer Frontansicht dargestellt.

Die Figur 2 zeigt das Mittelspannungs-Schaltfeld gemäß der Figur 1 in einer Seitenansicht mit abgenommener Abdeckung.

Die Figuren 3 und 4 zeigen einen Schloßkasten mit Türriegel, Steuerschieber und Tastorgan von vorn und von der Seite.

In der Figur 5 ist das Türschloß in einer perspektivischen Ansicht gezeigt, in der zur Sichtbarmaschung der wesentlichen Teile ein Schloßkasten und weitere Teile abgebrochen dargestellt sind.

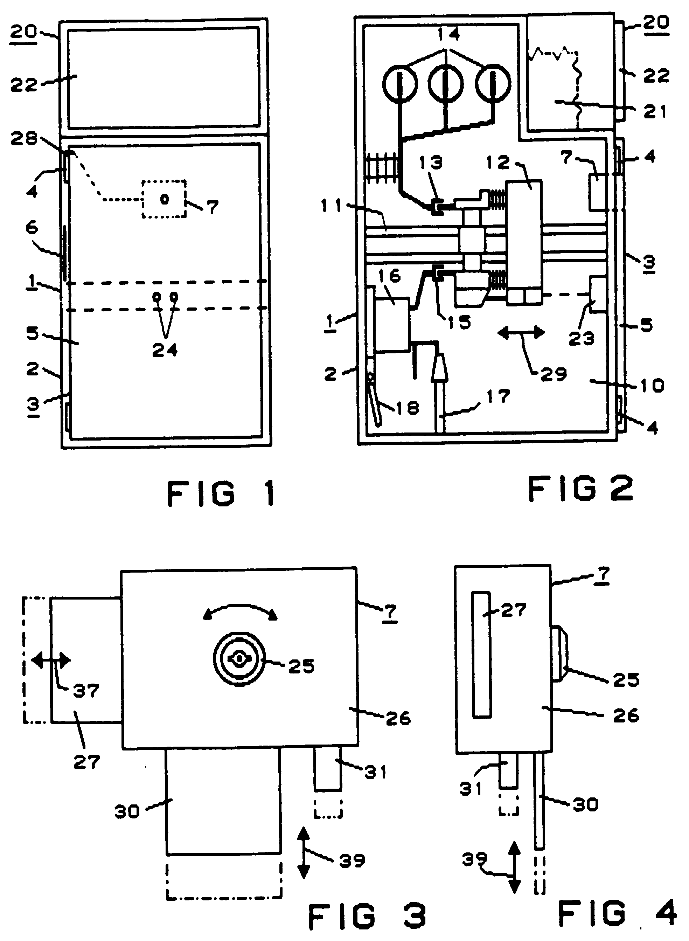

Das in den Figuren 1 und 2 gezeigte Mittelspannungs-Schaltfeld 1 weist ein Gehäuse 2 aus Stahblech mit einer Türanordnung 3 auf, die ein an Scharnieren 4 schwenkbar und vertikal verschiebbar gehaltenes Türblatt 5 sowie einen nur angedeuteten Hubmechanismus umfaßt. An dem Türblatt 5 ist innen ein Türschloß 7 befestigt, auf das anhand der Figuren 3, 4 und 5 noch näher eingegangen wird. Zunächst sei kurz der Aufbau des Mittelspannungs-Schaltfeldes erklärt. Wie näher der Figur 2 zu entnehmen ist, umschließt das Gehäuse 2 einen Schalterraum 10, in dem auf Fahrschienen 11 ein Schaltgerät, in dem gezeigten Beispiel ein Vakuum-Leistungsschalter 12, verfahrbar angeordnet ist. Dieser steht in der gezeigten Betriebsstellung mittels oberer Trennkontakte 13 mit Sammelschienen 14 in Verbindung. Die Abgangsseite des Leistungsschalters 12 ist mittels unterer Trennkontakte 15 über Stromwandler 16 mit Kabeln 17 verbunden. Ein unterhalb der Stromwandler 16 montierter Erdungstrenner 18 gestattet die Erdung der Kabel 17.

Oberhalb des Schalterraumes 10 weist das Mittelspannungs-Schaltfeld 1 einen Niederspannungskasten 20 auf, in dessen Niederspannungsraum 21 die zur Steuerung und Überwachung dienenden Geräte, Bedienungs- und Anzeigeeinrichtungen untergebracht sind. Eine den Niederspannungsraum 21 verschließende Tür 22 befindet sich oberhalb des Türblattes 5.

Zum Verfahren des Leistungsschalters 12 (Doppelpfeil 29) ist ein im vorderen Teil zwischen seitlichen Holmen des Gehäuses 2 verriegelbarer Fahrantrieb 23 vorgesehen, für dessen Bedienung in bekannter Weise im Türblatt 5 zwei Zugangsöffnungen 24 angeordnet sind (Figur 1). Die eine dieser Zugangsöffnungen 24 dient zum Einstecken einer Handkurbel, während die zweite für einen Verriegelungsschlüssel vorgesehen ist.

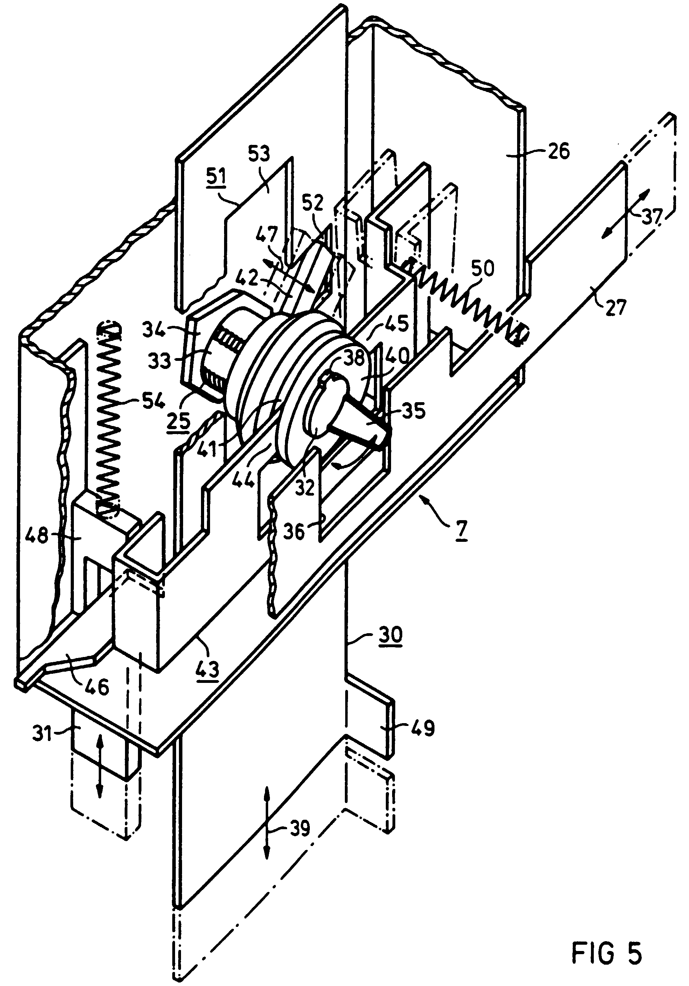

Das Schloß 7 (Figuren 3 und 4) besitzt ein Schließelement 25, das in dem gezeigten Beispiel für die Bedienung durch einen üblichen Schaltanlagenschlüssel (Doppelbart mit Hohlzapfen) ausgebildet ist. Es ist jedoch ohne jeden Einfluß auf die noch zu beschreibende Funktion des Schlosses 7 möglich, ein Schließelement für Schlüssel jeder geeigneten Art zu verwenden. In einem Schloßkasten 26 des Schlosses 7 ist nach links verschiebbar ein Türriegel 27 verschiebbar geführt. Der Türriegel 27 betätigt ein Sperrstück 28 (Figur 1), das je nach Betätigung des Schlosses 7 den Hubmechanismus 6 sperrt oder freigibt. Ferner ist in dem Schloßkasten 26 ein unten austretender Steuerschieber 30 geführt, der die Stellung einer nicht gezeigten Verschlußklappe für die Zugangsöffnungen 24 (Figur 1) signalisiert und der festgehalten wird, wenn der Leistungsschalter 12 (Figur 2) in der Betriebsstellung steht. Ein ebenfalls an der Unterseite des Schloßkastens herausragendes Tastorgan 31 erfaßt den Zustand, ob sich ein Schaltgerät im Schalterraum 10 (Figur 2) befindet oder nicht. Die Verschiebbarkeit des Türriegels 27, des Steuerschiebers 30 und des Tastorgans 31 ist in der Figur 5 strichpunktiert angedeutet.

Der Aufbau und die Wirkungsweise des Türschlosses 7 wird nun anhand der Figur 5 erläutert. Diese Figur zeigt das Türschluß von seiner Rückseite, so daß nicht die Einstecköffnung für den Schlüssel, sondern eine durch diesen zu betätigende Schließwelle 32 sichtbar ist. Die Schließwelle 32 ist einem Schloßkörper 33 des Schließelementes 25 gelagert, das sich durch eine Öffnung im Schloßkasten 26 erstreckt und daran mittels einer Mutter 34 befestigt ist. Die Schließwelle 32 trägt an ihrem Ende einen ersten Mitnehmer 35, der in eine Ausnehmung 36 des Türriegels 27 eintaucht, wodurch der Türriegel 27 bei Drehung der Schließwelle 32 in der Richtung des Doppelpfeiles 37 (vgl. Figur 3) verschiebbar ist.

Die Schließwelle 32 ist mit einer Führungsleiste 38 zur drehschlüssigen Verbindung der Schließwelle 32 mit einer axial verschiebbaren Schaltmuffe 40 versehen, die mit einer Umfangsnut 41 versehen ist. An der Schaltmuffe 40 befindet sich ein zweiter Mitnehmer 42, der bei entsprechender axialer Stellung mit dem Steuerschieber 30 zusammenwirkt, um diesen in der Richtung des Doppelpfeiles 39 (vgl. auch Figuren 3 und 4) zu verschieben. Zur Betätigung der Schaltmuffe 40 ist eine Steuergabel 43 vorgesehen, die in die Umfangsnut 41 eintauchende Nasen 44 und 45 besitzt. Die Steuergabel 43 ist um Drehzapfen 46 schwenkbar (Doppelpfeil 47), deren zugehörige Lageröffnungen durch Wegbrechen von Teilen des Schloßkastens 26 in der Figur 5 nicht sichtbar bzw. verdeckt sind. Die Stellung der Steuergabel wird durch das Tastorgan 31 beeinflußt, das ebenfalls in der Richtung des Doppelpfeiles 39 verschiebbar im Schloßkasten 26 geführt ist und das im Inneren des Schloßkastens 26 einen Gleitschieber 48 aufweist.

In der in der Figur 5 gezeigten Stellung des Tastorgans 31 und damit des Gleitschiebers 48 ist die Steuergabel 43 entgegen der Wirkung einer Rückstellfeder 50 in ihre aktive Stellung geschwenkt, in welcher der zweite Mitnehmer 42 in einer fensterartigen Ausnehmung 51 des Steuerschiebers 30 steht. Um die gewünschte Verschiebbarkeit des Steuerschiebers 30 zu erzielen, ist die fensterartige Ausnehmung 51 mit einem ersten Abschnitt 52 und einem zweiten Abschnitt 53 versehen. Befindet sich der zweite Mitnehmer 42, wie in der Figur 5 gezeigt, in dem ersten Abschnitt 52, so besteht eine Kupplung zwischen dem Steuerschieber 30 und der Schließwelle 32 in der Weise, daß diese bei Blockierung des Steuerschiebers nicht oder nur begrenzt drehbar ist. Der zweite Abschnitt 53 ist eine Freimachung entsprechend dem Durchmesser des Schloßkörpers 33 und dem Hub des Steuerschiebers 30. Um die Stellung der erwähnten Verschlußklappe vor den Zugangsöffnungen 24 (Figur 1) auf den Steuerschieber 30 zu übertragen, ist an diesem eine Abfragenase 49 angebracht.

Bei fehlendem Leistungsschalter 12 (Figur 2) wird das Tastorgan 31 und damit der Gleitschieber 48 unter dem Einfluß einer Rückstellfeder 54 nach unten verschoben. Hierdurch wird die Steuergabel 43 unter dem Einfluß der zugehörigen Rückstellfeder 50 um die Drehachse 46 in die gestrichelt angedeutete Stellung geschwenkt und dadurch die Schaltmuffe 50 mit dem zweiten Mitnehmer 42 in seine bezüglich des Steuerschiebers 30 unwirksame Stellung verschoben.

Wie strichpunktiert in der Figur 5 ferner gezeigt ist, läßt sich die Steuergabel 43 ausgehend von der wirksamen Stellung der Schaltmuffe 40 noch weiter im Uhrzeigersinn schwenken, bis der zweite Mitnehmer wiederum in einer unwirksamen Stellung steht. Diese Schwenkung der Steuergabel 43 kann durch ein Hilfswerkzeug erfolgen, das durch eine hierfür im Schloßkasten 26 vorgesehene Öffnung einführbar ist. Von einer solchen Notbetätigung kann insbesondere dann Gebrauch gemacht werden, wenn der fahrbare Leistungsschalter 12 durch Ausfall seines Fahrantriebes blockiert ist und daher das Türblatt 5 geöffnet werden muß.

## Patentansprüche

1. Metallgekapseltes Schaltfeld (1) mit einem Schalterraum (10) und einem darin mittels eines Fahrantriebes (23) verfahrbar angeordneten Schaltgerät (12) und einer den Schalterraum (10) abschließenden Türanordnung (3), in deren Türblatt (5) ein Verriegelungsbedingungen berücksichtigendes Türschloß (7) mit einem Türriegel (27) sowie wenigstens eine Zugangsöffnung (24) zur Bedienung des Fahrantriebes (23) angeordnet ist,
**dadurch gekennzeichnet**, daß das Schloß (7) ein Schließelement (25) mit einer Schließwelle (32) und mit zwei auf der Schließwelle (32) sitzenden Mitnehmern (35, 42) aufweist, von denen der erste Mitnehmer (35) mit dem Türriegel (27) zusammenwirkt, während der zweite Mitnehmer (42) auf der Schließwelle (32) axial verschiebbar angeordnet und in Eingriff bzw. außer Eingriff mit einem die Stellung einer Verschlußklappe an der wenigstens einen Zugangsöffnung (24) für den Fahrantrieb (23) des Schaltgerätes (12) signalisierenden Steuerschieber (30) zu bringen ist, wobei die axiale Verschiebung des zweiten Mitnehmers (42) in Abhängigkeit von dem Vorhandensein des Schaltgerätes (12) in dem Schalterraum (10) durch ein Tastorgan (31) steuerbar ist.

2. Metallgekapseltes Schaltfeld nach Anspruch 1,
**dadurch gekennzeichnet**, daß der Steuerschieber (30) eine fensterartige Ausnehmung (51) mit einem ersten Abschnitt (52) für den zweiten Mitnehmer (42) und mit einem zweiten, das Schließelement übergreifenden Abschnitt besitzt.

3. Metallgekapseltes Schaltfeld nach Anspruch 1 oder 2,
**dadurch gekennzeichnet**, daß der zweite Mitnehmer (42) an einer auf der Schließwelle (32) axial verschiebbaren und mit dieser drehschlüssig gekuppelten Schaltmuffe (40) angebracht ist und daß die Schaltmuffe (40) zum Eingriff einer Steuergabel (43) eine Umfangsnut (41) aufweist.

4. Metallgekapseltes Schaltfeld nach einem der vorangehenden Ansprüche,
**dadurch gekennzeichnet**, daß die Steuergabel (43) durch eine Rückstellfeder (50) in eine bezüglich des Steuerschiebers (30) unwirksame Stellung vorgespannt und durch das Tastorgan (31) entgegen der Wirkung der Rückstellfeder (50) in eine wirksame Stellung umstellbar ist.

5. Metallgekapseltes Schaltfeld nach einem der vorangehenden Ansprüche,
**dadurch gekennzeichnet**, daß das Türschloß (7) einen Schloßkasten (26) aufweist, in dem das Schließelement (25) befestigt und der Türriegel (27), der Steuerschieber (30) und das Tastorgan (31) verschiebbar geführt (37, 39) und die Steuergabel (34) schwenkbar gelagert (46) sind.

6. Metallgekapseltes Schaltfeld nach einem der vorangehenden Ansprüche,
**dadurch gekennzeichnet**, daß der Türriegel (27) ein die Hubbewegung eines zu der Türanordnung (3) gehörenden Hubmechanismus (6) verhinderndes Sperrstück (28) betätigt.

## Claims

1. Metal-enclosed switchgear panel (1) having a switch chamber (10) and a switching device (12), arranged such that it can be moved therein by means of a drive system (23), and a door arrangement (3) which shuts off the switch chamber (10), in the door leaf (5) of which arrangement a door lock (7), which takes account of locking conditions and has a door-locking bar (27), and also at least one access opening (24) for the purpose of operating the drive system (23) are arranged, characterised in that the lock (7) has a closing element (25) with a closing shaft (32) and with two drivers (35, 42) which sit on the closing shaft (32) and of which the first driver (35) cooperates with the door-locking bar (27), whilst the second driver (42) is arranged on the closing shaft (32) in an axially displaceable manner and can be engaged with or disengaged from a control slide (30) which indicates the position of a closing flap at the at least one access opening (24) for the drive system (23) of the switching device (12), with it being possible by means of a keying element (31) to control the axial displacement of the second driver (42) as a function of the presence of the switching device (12) in the switch chamber (10).

2. Metal-enclosed switchgear panel according to claim 1, characterised in that the control slide (30) has a window-like recess (51) with a first section (52) for the second driver (42) and with a second section which overlaps the closing element.

3. Metal-enclosed switchgear panel according to claim 1 or 2, characterised in that the second driver (42) is provided on a switch sleeve (40) which is axially displaceable on the closing shaft (32) and which is coupled therewith in a locked manner with respect to rotation and in that the switch sleeve (40) has a circumferential groove (41) for the engagement of a control fork (43).

4. Metal-enclosed switchgear panel according to one of the preceding claims, characterised in that the control fork (43) is pre-tensioned, by means of a restoring spring (50), into a position that is ineffective with regard to the control slide (30), and can be shifted into an effective position by means of the keying element (31) in opposition to the action of the restoring spring (50).

5. Metal-enclosed switchgear panel according to one of the preceding claims, characterised in that the door lock (7) has a lock box (26) in which the closing element (25) is secured and the door-locking bar (27), the control slide (30) and the keying element (31) are guided (37, 39) in a displaceable manner and the control fork (34) (sic) is swivel-mounted (46).

6. Metal-enclosed switchgear panel according to one of the preceding claims, characterised in that the door-locking bar (27) actuates a blocking piece (28) which prevents the lifting movement of a lifting mechanism (6) that pertains to the door arrangement (3).

## Revendications

1. Panneau (1) de couplage sous enveloppe métallique comportant une chambre (10) d'interrupteurs et un appareil (12) de coupure disposé à l'intérieur de celle-ci et pouvant être déplacé au moyen d'un organe (23) de translation et un dispositif (3) de porte, qui ferme la chambre (10) d'interrupteur et dans le ventail (5) de porte duquel sont prévues une serrure (7) de porte tenant compte de conditions de verrouillage et comportant un verrou (27) de porte ainsi qu'au moins une ouverture (24) d'accès pour se servir de l'organe (23) de translation,
caractérisé en ce que la serrure (7) comporte un élément (25) de fermeture comportant un arbre (32) de fermeture et deux tocs (35, 42) d'entraînement placés sur l'arbre (32) d'entraînement, dont le premier toc (35) d'entraînement coopère avec le verrou (27) de la porte, tandis que le second toc (42) d'entraînement est monté de manière à pouvoir coulisser axialement sur l'arbre (32) de fermeture et peut être amené en prise ou non en prise avec un coulisseau (30) de commande signalant la position d'un clapet de fermeture sur la au moins une ouverture (24) d'accès pour l'organe (23) de translation de l'appareil (12) de coupure, le coulissement axial du second toc (42) d'entraînement pouvant être commandé en fonction de la présence de l'appareil (12) de coupure dans la chambre (10) d'interrupteur par un organe (31) de manipulation.

2. Panneau de couplage sous enveloppe métallique suivant la revendication 1,
caractérisé en ce que le coulisseau (30) de commande a un évidement (51) en forme de fenêtre comportant une première partie (52) pour le second toc (42) d'entraînement et une seconde partie empiétant sur l'élément de fermeture.

3. Panneau de couplage sous enveloppe métallique suivant la revendication 1 ou 2,
caractérisé en ce que le second toc (42) d'entraînement est monté sur un manchon (40) de commutation pouvant coulisser axialement sur l'arbre (32) de fermeture et accouplé avec celui-ci solidairement en rotation et le manchon (40) de commutation comporte une gorge (41) périphérique pour la prise d'une fourche (43) de commande.

4. Panneau de couplage sous enveloppe métallique suivant l'une des revendications précédentes,
caractérisé en ce que la fourche (43) de commande est précontrainte par un ressort (50) de rappel dans une position inactive par rapport au coulisseau (30) de commande et peut être mise dans une position active par l'organe (31) de manipulation à l'encontre de l'action du ressort (50) de rappel.

5. Panneau de couplage sous enveloppe métallique suivant l'une des revendications précédentes,
caractérisé en ce que la serrure (7) de la porte comporte une case (26) de serrure dans laquelle l'élément (25) de fermeture est fixé et le verrou (27) de la porte, le coulisseau (30) de commande et l'organe (31) de manipulation sont guidés (37, 39) de manière à pouvoir coulisser et la fourche (34) de commande est montée (46) de manière à pouvoir basculer.

6. Panneau de couplage sous enveloppe métallique suivant l'une des revendications précédentes,
caractérisé en ce que le verrou (27) de la porte actionne une pièce (28) de blocage empêchant le mouvement de levage d'un mécanisme (6) de levage faisant partie du dispositif (3) de porte.
